# EUROPÄISCHE PATENTANMELDUNG

(11) **EP 3 865 696 A1**
(43) Veröffentlichungstag der Anmeldung: **18.08.2021**
(21) Anmeldenummer: 21153280.9
(22) Anmeldetag: 25.01.2021
(51) Int. Cl.: F02D 9/10, F02D 9/04, F16K 1/22, F02D 9/02

(54) **KLAPPENEINRICHTUNG**

(30) Priorität: 11.02.2020 DE 102020103420
(71) Anmelder: Friedrich Boysen GmbH & Co. KG, 72213 Altensteig (DE)
(72) Erfinder: EDLER, Michael, 72221 Haiterbach (DE); ROLLER, Volker, 72226 Simmersfeld (DE); STOCKINGER, Karl, 72224 Ebhausen (DE)
(74) Vertreter: Manitz Finsterwald Patent- und Rechtsanwaltspartnerschaft mbB

(57) **Zusammenfassung**

Eine Klappeneinrichtung für ein Kraftfahrzeug umfasst ein Klappengehäuse, das von einem Gasstrom durchströmbar ist, und eine Klappenwelle, die mittels eines ersten und eines zweiten Lagerelements, die an dem Klappengehäuse gehalten sind, um eine Rotationsachse drehbar in dem Klappengehäuse gelagert ist und die eine Klappe zum wahlweisen Sperren oder Drosseln des Gasstroms trägt. Die Klappenwelle ist über ein festes Anschlagelement, das in Bezug auf die Klappenwelle axialfest angeordnet ist, an dem ersten Lagerelement in einer ersten axialen Richtung abgestützt. Die Klappenwelle ist über ein bewegliches Anschlagelement, das axial verschiebbar auf der Klappenwelle sitzt, in einer zweiten axialen Richtung an dem zweiten Lagerelement abgestützt, die entgegengesetzt zur ersten axialen Richtung ausgerichtet ist, wobei das bewegliche Anschlagelement mittels einer Federeinrichtung in Richtung zu dem zweiten Lagerelement hin vorgespannt ist, und wobei sich die Federeinrichtung hierbei an einer wellenfesten Stützfläche abstützt und so das feste Anschlagelement gegen das erste Lagerelement zieht.

## Beschreibung

Die vorliegende Erfindung betrifft eine Klappeneinrichtung für ein Kraftfahrzeug, insbesondere eine Abgasklappeneinrichtung, mit einem Klappengehäuse, das von einem Gasstrom durchströmbar ist, und mit einer Klappenwelle, die mittels wenigstens einem ersten und einem zweiten Lagerelement, die an dem Klappengehäuse gehalten sind, um eine Rotationsachse drehbar in dem Klappengehäuse gelagert ist und die eine Klappe zum wahlweisen Sperren oder Drosseln des Gasstroms trägt, wobei die Klappenwelle über ein festes Anschlagelement, das in Bezug auf die Klappenwelle axialfest angeordnet ist, an dem ersten Lagerelement in einer ersten axialen Richtung abgestützt ist.

Derartige Einrichtungen werden beispielsweise zum wahlweisen Verschließen von Abgaspfaden in Abgassystemen von Kraftfahrzeugen eingesetzt. Die in dem Klappengehäuse befindliche Klappe kann üblicherweise zwischen einer den Abgasstrom freigebenden und einer den Abgasstrom sperrenden Stellung verdreht werden. Ein teilweises oder vollständiges Sperren des Abgasstroms kann beispielsweise im Rahmen der Akustik-Auslegung von Abgasanlagen oder zum gezielten Erzeugen eines Gegendrucks erfolgen. Auch im Rahmen eines Abgasrückführungssystems zur innermotorischen Stickoxid-Reduzierung können Abgasklappen zum Einsatz kommen, zum Beispiel um einen Niederdruck-Pfad auf der Frischluftseite eines Verbrennungsmotors gezielt mit einer bestimmten Menge Abgas zu beaufschlagen.

Das axiale Abstützen der Klappenwelle an dem ersten Lagerelement sorgt für eine exakte Positionierung der Klappenwelle und wirkt einem unerwünschten Gasaustritt aus dem Klappengehäuse entgegen. Das zweite Lagerelement ist üblicherweise zur Bildung eines Loslagers ausgebildet, um eine Kompensation thermisch bedingter Relativbewegungen zwischen der Klappenwelle und dem Klappengehäuse zu ermöglichen. Infolge von Druckpulsationen im Klappengehäuse kann es während des Betriebs des zugehörigen Abgassystems zu Bewegungen der Klappenwelle innerhalb des Lagerspiels kommen. Insbesondere ist bei bestimmten Pulsationsfrequenzen und -Amplituden ein wiederholtes Abheben der Klappenwelle vom Dichtanschlag mit jeweils nachfolgendem Wiederanschlagen möglich. Dies führt zu unerwünschten, beispielsweise rasselnden und/oder scheppernden Störgeräuschen. Solche Störgeräusche treten verstärkt bei Abgasanlagen mit geringem Dämpfungsvolumen und dementsprechend verringertem Abbau von Ladungswechselpulsationen auf.

Weiterhin besteht bei gängigen Klappeneinrichtungen der Wunsch, die Abdichtung im Bereich der Wellendurchführungen zu verbessern.

Es ist eine Aufgabe der Erfindung, eine Klappeneinrichtung der eingangs genannten Art bereitzustellen, die auch bei Vorliegen relativ starker Pulsationen geräuscharm ist und die einen Gasaustritt aus dem Klappengehäuse zuverlässig verhindert.

Die Lösung der Aufgabe erfolgt durch eine Klappeneinrichtung mit den Merkmalen des Anspruchs 1.

Erfindungsgemäß ist vorgesehen, dass die Klappenwelle über ein bewegliches Anschlagelement, das axial verschiebbar auf der Klappenwelle sitzt, in einer zweiten axialen Richtung an dem zweiten Lagerelement abgestützt ist, die entgegengesetzt zur ersten axialen Richtung ausgerichtet ist, wobei das bewegliche Anschlagelement mittels einer Federeinrichtung in Richtung zu dem zweiten Lagerelement hin vorgespannt ist, wobei sich die Federeinrichtung hierbei an einer wellenfesten Stützfläche abstützt und so das feste Anschlagelement gegen das erste Lagerelement drückt.

Die Federeinrichtung drückt das feste Anschlagelement gegen das erste Lagerelement und gleichzeitig das bewegliche Anschlagelement gegen das zweite Lagerelement. Der Verbund aus Klappe und Klappenwelle ist somit unter Verwendung einer einzelnen Federeinrichtung in beiden Lagern axial abgestützt. Auf die Klappe wirkende Druckschwankungen müssen erst die Reibungskräfte zwischen den Anschlagelementen und den Lagerelementen überwinden, bevor es zu Relativbewegungen zwischen der Klappenwelle und dem Klappengehäuse und somit zu den vorstehend genannten Störgeräuschen kommen kann. Die Federhärte der Federeinrichtung kann so gewählt werden, dass Anregungen mit häufig auftretenden Frequenzen und Amplituden besonders ausgeprägt entgegengewirkt wird. Prinzipiell sind jedoch axiale Ausgleichsbewegungen der Klappenwelle unter Überwindung der Federkraft möglich, so dass unerwünschte Verspannungen aufgrund thermischer Ausdehnungsbewegungen vermieden werden. Da lediglich eine Federeinrichtung für die axiale Abstützung der Klappenwelle an zwei Lagerelementen notwendig ist, ist eine erfindungsgemäße Klappeneinrichtung besonders einfach und kostengünstig zu fertigen,

Die Klappenwelle kann durch die Lagerelemente radial geführt sein. Vorzugsweise verläuft die Rotationsachse quer zur Strömungsrichtung. Die Klappenwelle kann sich quer zur Strömungsrichtung durch das Klappengehäuse hindurch erstrecken. Insbesondere kann die Rotationsachse mit einer Längsachse der Klappenwelle zusammenfallen. Um eine zuverlässige Lagerung zu gewährleisten, können die Lagerelemente an gegenüberliegenden Stellen des Klappengehäuses angeordnet sein.

Die Begriffe "axial" und "radial" sind in der vorliegenden Offenbarung auf die Rotationsachse bezogen zu verstehen.

Eine Ausführungsform der Erfindung sieht vor, dass das feste Anschlagelement direkt am ersten Lagerelement anliegt und/oder dass das bewegliche Anschlagelement direkt am zweiten Lagerelement anliegt. Dies ermöglicht eine besonders einfache und kompakte Konstruktion. Grundsätzlich könnten sich das feste und/oder das bewegliche Anschlagelement jedoch über ein oder mehrere Zwischenelemente am jeweiligen Lagerelement abstützen.

Eine weitere Ausführungsform der Erfindung sieht vor, dass das erste Lagerelement eine von dem Klappengehäuse weg weisende Stirnfläche aufweist und das feste Anschlagelement an der Stirnfläche des ersten Lagerelements flächig anliegt und/oder dass das zweite Lagerelement eine von dem Klappengehäuse weg weisende Stirnfläche aufweist und das bewegliche Anschlagelement an der Stirnfläche des zweiten Lagerelements flächig anliegt. Ein flächiges Anliegen verbessert die Abdichtung des Klappengehäuses. Insbesondere wird der unerwünschten Ausbildung von Leckage-Pfaden entgegengewirkt. Die Stirnflächen können eben ausgebildet sein und an zugehörigen ebenen Flächen der Lagerelemente anliegen.

Gemäß einer speziellen Ausgestaltung der Erfindung sind die Lagerelemente in Lagerbuchsen aufgenommen, die jeweils am Klappengehäuse befestigt oder einstückig mit diesem ausgeführt sind. Diese Bauweise ist besonders einfach und kompakt. Vorzugsweise sind die Lagerbuchsen stoffschlüssig am Klappengehäuse befestigt. Insbesondere können die Lagerbuchsen an einer Außenseite des Klappengehäuses befestigt sein.

Es kann vorgesehen sein, dass das erste und/oder das zweite Lagerelement in einer vom Klappengehäuse weg weisenden axialen Richtung über die jeweiligen Lagerbuchsen überstehen. Dies ermöglicht ein Anliegen der Anschlagelemente an den Lagerelementen, ohne dass es zu einem störgeräuschträchtigen Kontakt zwischen den Anschlagelementen und den Lagerbuchsen kommt.

Es kann vorgesehen sein, dass das erste Lagerelement und/oder das zweite Lagerelement wenigstens teilweise aus Graphit gefertigt ist/sind, um die Reibung zu vermindern. Der Graphit kann eine hexagonale Schichtstruktur aufweisen.

Bevorzugt umfasst die Klappeneinrichtung einen, insbesondere elektrischen, Stellantrieb zum kraftbetätigten Verdrehen der Klappenwelle. Mittels eines solchen Stellantriebs kann die Klappe während des Betriebs der zugehörigen Abgasanlage in Abhängigkeit von Steuersignalen in vorgegebene Drehstellungen gestellt werden, um so die Abgasströmung in einer gewünschten Weise zu steuern.

Vorzugsweise ist das zweite Lagerelement an einer dem Stellantrieb zugewandten Seite des Klappengehäuses angeordnet. Es hat sich nämlich als günstig herausgestellt, die Abstützung über das bewegliche Anschlagelement auf der angetriebenen Seite der Klappenwelle vorzusehen, da die Fixierung durch den Stellantrieb die Bewegungsfreiheit der Klappenwelle in diesem Bereich ohnehin einschränkt, so dass eine zusätzliche Fixierung durch einen Festanschlag in diesem Bereich nicht notwendig ist.

Bevorzugt steht der Stellantrieb über eine Kupplung mit der Klappenwelle in antriebswirksamer Verbindung, die zwei axial gegeneinander verschiebbare Kupplungsteile umfasst. Dadurch werden die Belastung und der Verschleiß der Lager des Stellantriebs verringert. Die Kupplungsteile können insbesondere klauenförmig ineinandergreifen.

Vorzugsweise sind die Kupplungsteile über eine in wenigstens einer Drehrichtung wirksame Mitnehmereinrichtung gekoppelt, wobei eine Kupplungsfeder die Kupplungsteile relativ zueinander entgegen der Drehrichtung vorspannt. Durch eine solche Vorspannung ist einerseits eine spielfreie Drehmomentübertragung gewährleistet und somit die Geräuschbildung bei Betätigen der Klappe reduziert, andererseits wird aufgrund der Ausgestaltung der Kupplung in Form von zwei separaten Kupplungsteilen der Wärmeübertrag zwischen der Klappe und dem Stellantrieb verringert. Die Kupplungsfeder kann in die Federeinrichtung integriert sein oder als eigenständiges Bauteil ausgeführt sein.

Eine weitere Ausführungsform der Erfindung sieht vor, dass das bewegliche Anschlagelement napfartig ist und eine von dem zweiten Lagerelement weg weisende Napföffnung aufweist. Die Federeinrichtung und/oder eine Kupplungsfeder kann/können in dem napfartigen beweglichen Anschlagelement angeordnet sein, wodurch sich eine besonders kompakte Bauweise ergibt.

Es kann ein Dichtelement auf der Klappenwelle sitzen, das an einer axialen Stirnfläche des beweglichen Anschlagelements anliegt. Dieses verhindert einen Gasdurchtritt im Kontaktbereich zwischen der Klappenwelle und dem beweglichen Anschlagelement. Das Dichtelement kann zumindest teilweise aus Drahtgestrick gefertigt sein oder einen Wellbalg umfassen.

Eine weitere Ausführungsform der Erfindung sieht vor, dass das erste Lagerelement und das feste Anschlagelement durch ein gasdicht am Klappengehäuse befestigtes Abdeckelement gegenüber dem Außenraum abgedichtet sind. Dadurch ist es möglich, am antriebsfernen Lager der Klappenwelle eine vollständige Gasdichtheit zu gewährleisten. Das Abdeckelement kann beispielsweise haubenförmig sein und entlang des Rands der Haube am Klappengehäuse angeschweißt sein.

Gemäß einer weiteren Ausführungsform der Erfindung sind das feste Anschlagelement und/oder ein die wellenfeste Stützfläche aufweisendes Stützelement stoffschlüssig an der Klappenwelle befestigt und/oder scheibenförmig. Insbesondere kann es sich bei dem festen Anschlagelement und/oder bei dem Stützelement um Metallscheiben handeln, die an der Klappenwelle angeschweißt sind.

Eine spezielle Ausgestaltung der Erfindung sieht vor, dass das feste Anschlagelement einen Konus aufweist, der mit einem komplementär ausgebildeten Gegenkonus des ersten Lagerelements zusammenwirkt. Ein solcher formschlüssiger Kontakt zwischen dem festen Anschlagelement und dem ersten Lagerelement verbessert die Positionierung und Führung der Klappenwelle.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine seitliche Schnittansicht einer Klappeneinrichtung gemäß einer ersten Ausführungsform der Erfindung.
- Fig. 2: zeigt ein erstes Lagerelement der Klappeneinrichtung gemäß Fig. 1 in vergrößerter Ansicht.
- Fig. 3: zeigt ein zweites Lagerelement und eine Kupplung der Klappeneinrichtung gemäß Fig. 1 in vergrößerter Ansicht.
- Fig. 4: zeigt die Kupplung gemäß Fig. 2 in perspektivischer Ansicht.
- Fig. 5: ist eine seitliche Schnittansicht einer Klappeneinrichtung gemäß einer zweiten Ausführungsform der Erfindung.

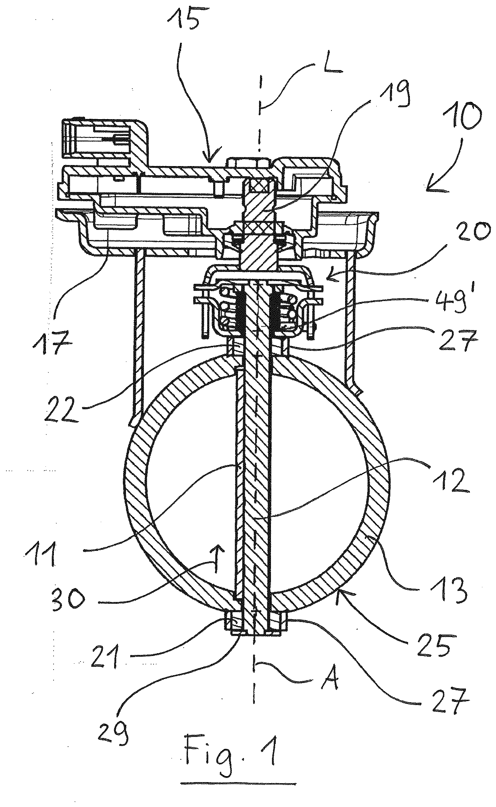

Die in Fig. 1 dargestellte, erfindungsgemäß gestaltete Klappeneinrichtung 10 umfasst eine Klappe 11, die von einer länglichen Klappenwelle 12 getragen ist. Die Klappenwelle 12 ist in einem Klappengehäuse 13 um eine Rotationsachse A drehbar gelagert. Die Rotationsachse A fällt hier mit der Längsachse L der Klappenwelle 12 zusammen. Die Klappeneinrichtung 10 ist vorzugsweise als Abgasklappeneinrichtung für eine Abgasanlage eines Kraftfahrzeugs ausgebildet. Dementsprechend sind die Klappe 11, die Klappenwelle 12 sowie das Klappengehäuse 13 bevorzugt aus wärmebeständigem Metall gefertigt. Bei der gezeigten Ausführungsform ist das Klappengehäuse 13 zumindest im Wesentlichen zylindrisch und die Klappe 11 ist zumindest im Wesentlichen kreisscheibenförmig. Je nach Anwendung sind jedoch auch andere Gehäuse- und Klappenformen möglich.

Zum Verdrehen der Klappe 11 um die Rotationsachse A ist ein elektrischer Stellantrieb 15 vorgesehen, der in einem am Klappengehäuse 13 befestigten Antriebsgehäuse 17 untergebracht ist. Eine Antriebswelle 19 des elektrischen Stellantriebs 15 ist über eine Kupplung 20 antriebswirksam mit der Klappenwelle 12 gekoppelt.

Zur drehbaren Lagerung der Klappenwelle 12 im Klappengehäuse 13 sind ein erstes Lagerelement 21 und ein zweites Lagerelement 22 vorgesehen, die wie gezeigt einander gegenüberliegend an der Außenseite 25 des Klappengehäuses 13 angeordnet sind. Das erste Lagerelement 21 und das zweite Lagerelement 22 sind ringförmig und sitzen auf der Klappenwelle 12. Vorzugsweise sind sie aus einem harten und reibungsmindernden Material, insbesondere Graphit, gefertigt. Wie dargestellt sind das erste Lagerelement 21 und das zweite Lagerelement 22 in jeweiligen Lagerbuchsen 27 aufgenommen, die an der Außenseite 25 des Klappengehäuses 13 angeschweißt sind.

An dem ersten Lagerelement 21 ist die Klappenwelle 12 über ein festes Anschlagelement 29 in einer ersten axialen Richtung 30, die bei dem dargestellten Ausführungsbeispiel in Richtung des elektrischen Stellantriebs 15 weist, abgestützt. Das feste Anschlagelement 29 ist bevorzugt scheibenförmig. Es kann stoffschlüssig an der Klappenwelle 12 befestigt, beispielsweise an dieser angeschweißt, sein. Alternativ kann es an die Klappenwelle 12 angeformt sein.

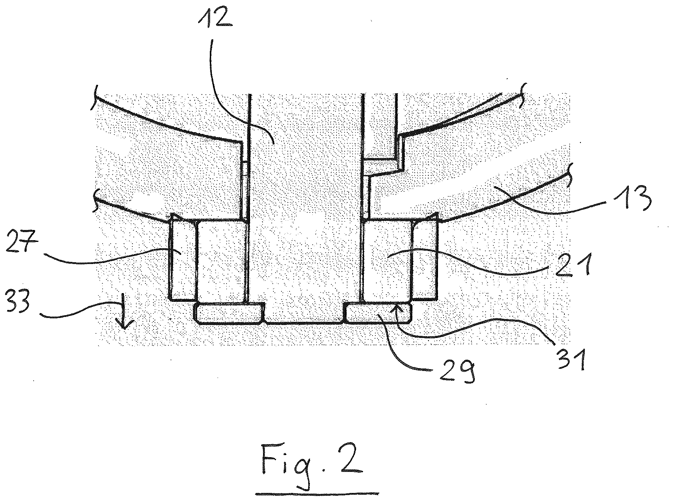

Wie in Fig. 2 erkennbar liegt das feste Anschlagelement 29 flächig an einer ebenen Stirnfläche 31 des ersten Lagerelements 21 an, die von dem Klappengehäuse 13 weg weist. Um einen störgeräuschträchtigen Kontakt zwischen dem festen Anschlagelement 29 und der Lagerbuchse 27 zu vermeiden, steht das erste Lagerelement 21 in einer vom Klappengehäuse 13 weg weisenden Richtung 33 über die Lagerbuchse 27 über. Das heißt es besteht ein Spalt zwischen der Lagerbuchse 27 und dem festen Anschlagelement 29.

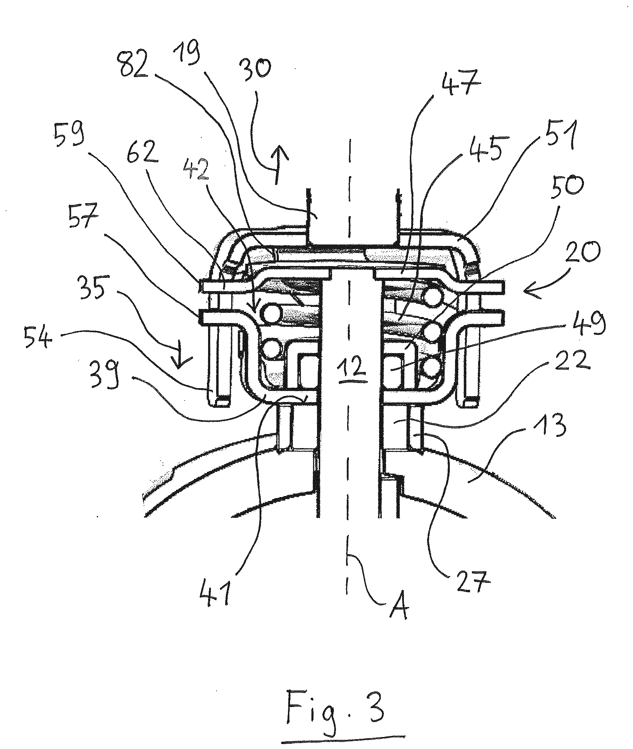

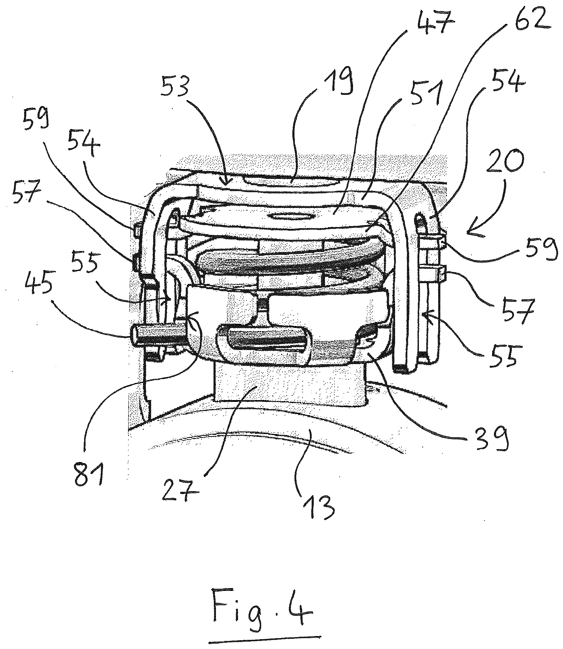

Wie insbesondere aus den vergrößerten Darstellungen gemäß Fig. 3 und 4 hervorgeht, ist im Bereich des zweiten Lagerelements 22 ein bewegliches Anschlagelement 39 vorgesehen, das axial verschiebbar auf der Klappenwelle 12 sitzt und flächig an einer ebenen Stirnfläche 41 des zweiten Lagerelements 22 anliegt, welche vom Klappengehäuse 13 weg weist. Wie gezeigt ist das bewegliche Anschlagelement 39 napfförmig und weist eine von dem zweiten Lagerelement 22 weg weisende Napföffnung 42 auf. In das napfartige bewegliche Anschlagelement 39 ist eine Schraubenfeder 45 unter axialer Vorspannung eingesetzt. Diese stützt sich in der ersten axialen Richtung 30 an einem Stützelement 47 ab, das an der Klappenwelle 12 angeschweißt ist. In der entgegengesetzten zweiten axialen Richtung 35 stützt sich die Schraubenfeder 45 an dem beweglichen Anschlagelement 39 ab.

Auch zwischen dem zweiten Lagerelement 22 und dem beweglichen Anschlagelement 39 ist ein Spalt vorhanden.

Aufgrund der Federwirkung der gespannten Schraubenfeder 45 wird einerseits das bewegliche Anschlagelement 39 gegen die ebene Stirnfläche 41 des zweiten Lagerelements 22 gedrückt, andererseits wird das feste Anschlagelement 29 (Fig. 2) an die ebene Stirnfläche 31 des ersten Lagerelements 21 herangezogen. Die Klappenwelle 12 ist dadurch axial im Klappengehäuse 13 fixiert. Unter Überwindung der Federkraft sind jedoch in einem gewissen Ausmaß axiale Relativbewegungen zwischen der Klappenwelle 12 und dem Klappengehäuse 13 möglich. Dadurch können bei Bedarf unterschiedliche thermische Ausdehnungen kompensiert werden.

An einer dem Klappengehäuse 13 abgewandten Seite des beweglichen Anschlagelements 39 ist wie in Fig. 3 gezeigt ein ringförmiges Dichtelement 49 angeordnet. Dieses ist in einer Hülse 50 aufgenommen und sitzt gemeinsam mit dieser auf der Klappenwelle 12. Die Hülse 50 ist am Boden des napfartigen beweglichen Anschlagelements 39 befestigt. Das Dichtelement 49 kann aus einem Drahtgestrick gefertigt sein. In Fig. 1 ist eine andere Variante eines Dichtelements 49' gezeigt. Dieses Dichtelement 49' ist als Wellbalg ausgeführt und nicht in einer Hülse aufgenommen. Aufgrund des Dichtelements 49, 49' werden Leckage-Strömungen zwischen der Klappenwelle 12 und dem beweglichen Anschlagelement 39 vermieden.

Nachfolgend wird die Gestaltung der Kupplung 20 unter Bezugnahme auf Fig. 4 beschrieben. Ein erstes Kupplungsteil 51 der Kupplung 20 ist an der Antriebswelle 19 des elektrischen Stellantriebs 15 (Fig. 1) befestigt. Das erste Kupplungsteil 51 weist einen plattenartigen Basisabschnitt 53 auf, von dem zwei Axialvorsprünge 54 abstehen. In diesen ist jeweils eine Nut 55 ausgebildet. An dem beweglichen Anschlagelement 39 sind zwei Radialvorsprünge 57 angeformt, die in entgegengesetzte Richtungen nach außen abstehen. Ebenso stehen von dem Stützelement 47 zwei Radialvorsprünge 59 in entgegengesetzten Richtungen nach außen ab. Sowohl die Radialvorsprünge 57 des beweglichen Anschlagelements 39 als auch die Radialvorsprünge 59 der Stützscheibe 47 greifen in die Nuten 55 ein und sorgen so für eine formschlüssige Verbindung zwischen dem ersten Kupplungsteil 51 und der Klappenwelle 12. Das Stützelement 47 bildet so ein zweites Kupplungsteil 62 der Kupplung 20.

Die Schraubenfeder 45 ist nicht nur unter axialer Vorspannung zwischen das bewegliche Anschlagelement 39 und die Stützscheibe 47 eingesetzt, sondern weist auch eine Torsionsspannung auf, welche das bewegliche Anschlagelement 39 gegenüber der Stützscheibe 47 in einer Drehrichtung vorspannt. Das Torsionsspiel der Kupplung 20 wird durch die Schraubenfeder 45 weggedrückt, die sich hierfür einerseits an einem Ansatz 81 (Fig. 4) des beweglichen Anschlagelements 39 und andererseits an einem Ansatz 82 (Fig. 3) des ersten Kupplungsteils 51 abstützt. Dadurch dass zwischen dem ersten Kupplungsteil 51 und dem zweiten Kupplungsteil 62 lediglich punktuelle Kontakte bestehen, ist die während des Betriebs auftretende Wärmeübertragung von der Klappenwelle 12 auf die Antriebswelle 19 des elektrischen Stellantriebs 15 nur gering. Der elektrische Stellantrieb 15 wird so vor thermischer Belastung geschützt.

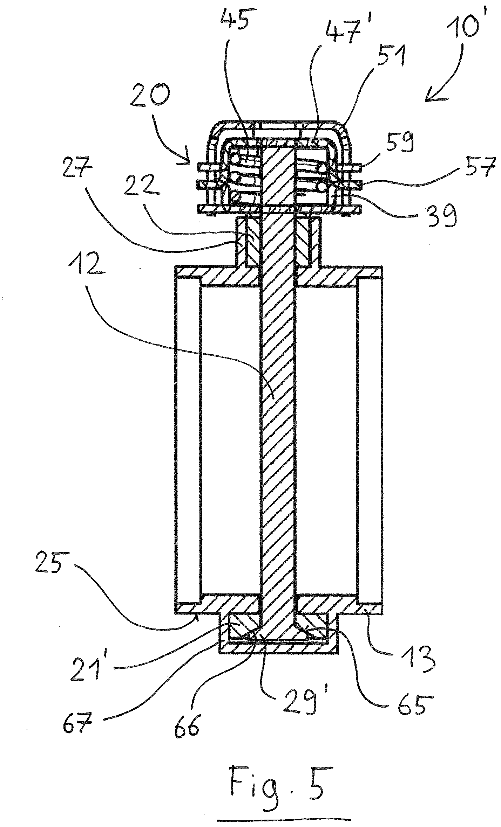

In Fig. 5 ist eine alternative Ausführungsform einer erfindungsgemäßen Klappeneinrichtung 10' dargestellt, die ähnlich aufgebaut ist wie die zuvor beschriebene Klappeneinrichtung 10. Insbesondere weist die in Fig. 5 gezeigte Klappeneinrichtung 10' eine Klappenwelle 12, ein Klappengehäuse 13 sowie ein erstes Lagerelement 21' und ein zweites Lagerelement 22 auf. Das zweite Lagerelement 22 ist wie bei der zuvor beschriebenen Ausführungsform in einer Lagerbuchse 27 aufgenommen. Die Kupplung 20 ist ebenfalls ähnlich gestaltet wie bei der zuvor beschriebenen Ausführungsform, weist jedoch im Unterschied zu dieser ein napfartiges Stützelement 47' auf, in welchem die Schraubenfeder 45 aufgenommen ist. Das feste Anschlagelement 29' unterscheidet sich insofern von dem festen Anschlagelement 29 gemäß Fig. 1, als es einen Konus 65 aufweist, der mit einem Gegenkonus 66 des ersten Lagerelements 21' zusammenwirkt. Dadurch wird die radiale und axiale Festlegung der Klappenwelle 12 im Klappengehäuse 13 verbessert.

Ein weiterer Unterschied zur Ausführungsform gemäß Fig. 1 besteht darin, dass für das erste Lagerelement 21' anstelle einer Lagerbuchse ein haubenförmiges Abdeckelement 67 vorgesehen ist. Das Abdeckelement 67 ist derart an der Außenseite 25 des Klappengehäuses 13 angeschweißt, dass es das erste Lagerelement 21' vollständig überdeckt. Selbst wenn es zu Leckageströmen zwischen dem ersten Lagerelement 21' und der Klappenwelle 12 kommen sollte, ist kein Gasaustritt nach außen zu befürchten.

Eine erfindungsgemäße Klappeneinrichtung 10, 10' kann insbesondere in eine Abgasanlage eines Kraftfahrzeugs integriert sein. Bei einem Betrieb des Kraftfahrzeugs kommt es selbst in dem Fall, dass starke Druckpulsationen auftreten, nicht zu einer unerwünschten Geräuscherzeugung durch die Klappeneinrichtung 10, 10', weil die Klappenwelle 12 an beiden gegenüberliegenden Lagerstellen axial abgestützt ist. Aufgrund des beweglichen Anschlagelements 39 ist aber lediglich eine Schraubenfeder 45 erforderlich. Aufgrund des flächigen Anliegens des festen Anschlagelements 29, 29' und des beweglichen Anschlagelements 39 an den jeweiligen ebenen Stirnflächen 31, 41 des ersten Lagerelements 21, 21' und des zweiten Lagerelements 22 werden unerwünschte Leckageströme wirksam verhindert.

### Bezugzeichenliste:

- 10, 10': Klappeneinrichtung
- 11: Klappe
- 12: Klappenwelle
- 13: Klappengehäuse
- 15: elektrischer Stellantrieb
- 17: Antriebsgehäuse
- 19: Antriebswelle
- 20: Kupplung
- 21, 21': erstes Lagerelement
- 22: zweites Lagerelement
- 25: Außenseite
- 27: Lagerbuchse
- 29, 29': festes Anschlagelement
- 30: erste axiale Richtung
- 31: ebene Stirnfläche
- 33: vom Klappengehäuse weg weisende Richtung
- 35: zweite axiale Richtung
- 39: bewegliches Anschlagelement
- 41: ebene Stirnfläche
- 42: Napföffnung
- 45: Schraubenfeder
- 47, 47': Stützelement
- 49, 49': Dichtelement
- 50: Hülse
- 51: erstes Kupplungsteil
- 53: plattenförmiger Basisabschnitt
- 54: Axialvorsprung
- 55: Nut
- 57: Radialvorsprung
- 59: Radialvorsprung
- 62: zweites Kupplungsteil
- 65: Konus
- 66: Gegenkonus
- 67: Abdeckelement

- A: Rotationsachse
- L: Längsachse

## Patentansprüche

1. Klappeneinrichtung (10, 10') für ein Kraftfahrzeug, insbesondere Abgasklappeneinrichtung, mit einem Klappengehäuse (13), das von einem Gasstrom durchströmbar ist, und mit einer Klappenwelle (12), die mittels wenigstens einem ersten und einem zweiten Lagerelement (21, 21', 22), die am Klappengehäuse (13) gehalten sind, um eine Rotationsachse (A) drehbar in dem Klappengehäuse (13) gelagert ist und die eine Klappe (11) zum wahlweisen Sperren oder Drosseln des Gasstroms trägt,
wobei die Klappenwelle (12) über ein festes Anschlagelement (29, 29'), das in Bezug auf die Klappenwelle (12) axialfest angeordnet ist, an dem ersten Lagerelement (21, 21') in einer ersten axialen Richtung (30) abgestützt ist, **dadurch gekennzeichnet, dass**
die Klappenwelle (12) über ein bewegliches Anschlagelement (39), das axial verschiebbar auf der Klappenwelle (12) sitzt, in einer zweiten axialen Richtung (35) an dem zweiten Lagerelement (22) abgestützt ist, die entgegengesetzt zur ersten axialen Richtung (30) ausgerichtet ist,
wobei das bewegliche Anschlagelement (39) mittels einer Federeinrichtung (45) in Richtung zu dem zweiten Lagerelement (22) hin vorgespannt ist,
wobei sich die Federeinrichtung (45) hierbei an einer wellenfesten Stützfläche abstützt und so das feste Anschlagelement (29, 29') gegen das erste Lagerelement (21, 21') drückt.

2. Klappeneinrichtung nach Anspruch 1,
**dadurch gekennzeichnet,**
**dass** das feste Anschlagelement (29, 29') direkt am ersten Lagerelement (21, 21') anliegt und/oder das bewegliche Anschlagelement (39) direkt am zweiten Lagerelement (22) anliegt.

3. Klappeneinrichtung nach Anspruch 2,
**dadurch gekennzeichnet,**
**dass** das erste Lagerelement (21, 21') eine von dem Klappengehäuse (13) weg weisende Stirnfläche (31) aufweist und das feste Anschlagelement (29, 29') an der Stirnfläche (31) des ersten Lagerelements (21, 21') flächig anliegt und/oder
**dass** das zweite Lagerelement (22) eine von dem Klappengehäuse (13) weg weisende Stirnfläche (41) aufweist und das bewegliche Anschlagelement (39) an der Stirnfläche (41) des zweiten Lagerelements (22) flächig anliegt.

4. Klappeneinrichtung nach einem der vorstehenden Ansprüche,
**dadurch gekennzeichnet,**
**dass** die Lagerelemente (21, 22) in Lagerbuchsen (27) aufgenommen sind, die jeweils am Klappengehäuse (13) befestigt oder einstückig mit diesem ausgeführt sind.

5. Klappeneinrichtung nach Anspruch 4,
**dadurch gekennzeichnet,**
**dass** das erste und/oder das zweite Lagerelement (21, 22) in einer vom Klappengehäuse (13) weg weisenden axialen Richtung (33) über die jeweiligen Lagerbuchsen (27) überstehen.

6. Klappeneinrichtung nach einem der vorstehenden Ansprüche,
**dadurch gekennzeichnet,**
**dass** das erste Lagerelement (21, 21') und/oder das zweite Lagerelement (22) wenigstens teilweise aus Graphit gefertigt ist/sind.

7. Klappeneinrichtung nach einem der vorstehenden Ansprüche,
**dadurch gekennzeichnet,**
**dass** die Klappeneinrichtung (10, 10') einen, insbesondere elektrischen, Stellantrieb (15) zum kraftbetätigten Verdrehen der Klappenwelle (12) umfasst.

8. Klappeneinrichtung nach Anspruch 7,
**dadurch gekennzeichnet,**
**dass** das zweite Lagerelement (22) an einer dem Stellantrieb (15) zugewandten Seite des Klappengehäuses (13) angeordnet ist.

9. Klappeneinrichtung nach Anspruch 7 oder 8,
**dadurch gekennzeichnet,**
**dass** der Stellantrieb (15) über eine Kupplung (20) mit der Klappenwelle (12) in antriebswirksamer Verbindung steht, die zwei axial gegeneinander verschiebbare Kupplungsteile (51, 62) umfasst.

10. Klappeneinrichtung nach Anspruch 9,
**dadurch gekennzeichnet**,
die Kupplungsteile (51, 62) über eine in wenigstens einer Drehrichtung wirksame Mitnehmereinrichtung (55, 57, 59) gekoppelt sind, wobei eine Kupplungsfeder (45) die Kupplungsteile (51, 65) relativ zueinander entgegen der Drehrichtung vorspannt.

11. Klappeneinrichtung nach einem der vorstehenden Ansprüche,
**dadurch gekennzeichnet,**
**dass** das bewegliche Anschlagelement (39) napfartig ist und eine von dem zweiten Lagerelement (22) weg weisende Napföffnung (42) aufweist.

12. Klappeneinrichtung nach einem der vorstehenden Ansprüche,
**dadurch gekennzeichnet,**
**dass** ein Dichtelement (49, 49') auf der Klappenwelle (12) sitzt, das an einer axialen Stirnfläche des beweglichen Anschlagelements (39) anliegt.

13. Klappeneinrichtung nach einem der vorstehenden Ansprüche,
**dadurch gekennzeichnet,**
**dass** das erste Lagerelement (21') und das feste Anschlagelement (29') durch ein gasdicht am Klappengehäuse (13) befestigtes Abdeckelement (67) gegenüber dem Außenraum abgedichtet sind.

14. Klappeneinrichtung nach einem der vorstehenden Ansprüche,
**dadurch gekennzeichnet,**
**dass** das feste Anschlagelement (29, 29') und/oder das wellenfeste Stützelement (47, 47') stoffschlüssig an der Klappenwelle (12) befestigt und/oder scheibenförmig sind.

15. Klappeneinrichtung nach einem der vorstehenden Ansprüche,
**dadurch gekennzeichnet,**
**dass** das feste Anschlagelement (29') einen Konus (65) aufweist, der mit einem komplementär ausgebildeten Gegenkonus (66) des ersten Lagerelements (21, 21') zusammenwirkt.
